# EUROPEAN PATENT APPLICATION

(11) **EP 3 511 849 A1**
(43) Date of publication of application: **17.07.2019**
(21) Application number: 17848887.0
(22) Date of filing: 08.09.2017
(51) Int. Cl.: G06F 21/32, G06F 21/34, G06T 7/00

(54) **PORTABLE ELECTRONIC DEVICE**

(30) Priority: 12.09.2016 JP 2016178053
(71) Applicant: Kabushiki Kaisha Toshiba, Minato-ku Tokyo 105-8001 (JP); Toshiba Infrastructure Systems & Solutions Corporation, Kawasaki-shi, Kanagawa 212-0013 (JP)
(72) Inventor: MIURA, Shuzo, Kawasaki-shi, Kanagawa 212-0013 (JP)
(74) Representative: Hoffmann Eitle
(86) International application number: PCT/JP2017/032512
(87) International publication number: WO 2018/047949

(57) **Abstract**

A portable electronic device includes a communication unit, a storage unit, a first processing unit, and a second processing unit. The communication unit transmits and receives data to and from the external device. The storage unit stores registered biometric information and registered information. The first processing unit includes a biometric information acquisition unit, a biological verification unit, and a first determination unit. The biometric information acquisition unit acquires the biometric information of the humanbeings' biological body. The biological verification unit calculates a verification rate between the biometric information acquired by the biometric information acquisition unit and the registered biometric information stored in the storage unit. When the first determination unit determines that the verification rate exceeds a first authentication threshold value, the first processing unit transmits success information indicating success of authentication to the external device through the communication unit. The second processing unit includes an input information acquisition unit, an input information determination unit, and a second determination unit. The input information acquisition unit acquires input information to be verified with the registered information stored in the storage unit. When the first determination unit determines that the verification rate does not exceed the first authentication threshold value, the input information determination unit determines that the input information acquired by the input information acquisition unit matches the registered information, and the second determination unit determines that the verification rate exceeds the second authentication threshold value lower than the first authentication threshold value, the second processing unit transmits success information indicating that the authentication has succeeded to the external device through the communication unit.

## Description

### TECHNICAL FIELD

An embodiment of a present invention relates to portable electronic devices.

### BACKGROUND ART

Some portable electronic devices such as IC cards have a fingerprint sensor. The IC card including the fingerprint sensor determines that authentication was successful if a verification rate between fingerprint information registered in advance and fingerprint information acquired from a user exceeds a predetermined threshold value. Biometric authentication does not always guarantee a personal recognition rate of 100% because biometric information of a human body may change. For this reason, in many systems an IC card performs PIN authentication in the case where the biometric authentication failed. However, with such an operation, there is a problem that irrespective of a result of the biometric authentication, personal authentication is performed by the PIN authentication of which security is relatively low in the end.

### Prior art literature

### Patent literature

Patent Literature 1: JP 2005-149093A

### SUMMARY OF THE INVENTION

### Problem to be solved by the invention

In order to solve the above problem, the present invention provides a portable electronic device capable of safely performing personal authentication.

### Means to solve the problem

According to an embodiment, a portable electronic device includes a communication unit, a storage unit, a first processing unit, and a second processing unit. The communication unit transmits and receives data to and from an external device. The storage unit stores registered biometric information and registered information. The first processing unit includes a biometric information acquisition unit, a biological verification unit, and a first determination unit. The biometric information acquisition unit acquires the biometric information of a humanbeings' biological body. The biological verification unit calculates a verification rate between the biometric information acquired by the biometric information acquisition unit and the registered biometric information stored in the storage unit. When the first determination unit determines that the verification rate exceeds a first authentication threshold value, the first processing unit transmits success information indicating that authentication has succeeded to the external device through the communication unit. The second processing unit includes an input information acquisition unit, an input information determination unit, and a second determination unit. The input information acquisition unit acquires input information to be compared with the registered information stored in the storage unit. When the first determination unit determines that the verification rate does not exceed the first authentication threshold value, the input information determination unit determines that the input information acquired by the input information acquisition unit matches the registered information, and the second determination unit determines that the verification rate exceeds the second authentication threshold value lower than the first authentication threshold value, the second processing unit transmits the success information indicating that the authentication has succeeded to the external device through the communication unit.

### BRIEF DESCRIPTION OF THE DRAWINGS

FIG. 1 is a diagram showing a configuration example of an IC card processing system having an IC card and an IC card processing device according to an embodiment.
FIG. 2 is a block diagram showing a configuration example of the IC card according to the embodiment.
FIG. 3 is a flowchart showing an operation example of the IC card according to the embodiment.
FIG. 4 is a flowchart showing an operation example of the IC card according to the embodiment.
FIG. 5 shows functions realized by a CPU of the IC card according to the embodiment.

### EMBODIMENT TO PRACTICE THE INVENTION

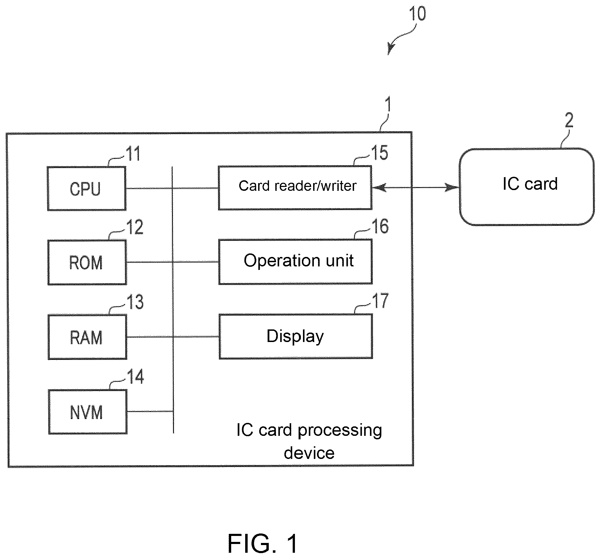

Hereinafter, an embodiment will be described with reference to the drawings. In the following description, an IC card is used as an example of a portable electronic device. Fig. 1 is a block diagram showing a configuration example of an IC card processing system 10 including an IC card 2 as a portable electronic device according to the embodiment and an IC card processing device 1 as an external device for communicating with the IC card 2.

In the configuration example shown in FIG. 1, the IC card processing device 1 includes a CPU 11, a ROM 12, a RAM 13, an NVM 14, a card reader/writer 15, an operation unit 16, a display 17, and the like. These units are connected to each other via a data bus. Note that in addition to the configuration as shown in FIG. 1, the IC card processing device 1 may have a configuration according to necessity or exclude a specific configuration.

The CPU 11 (processing unit) has a function of controlling operation of the entire IC card processing device 1. The CPU 11 may include an internal cache and various interfaces and the like. The CPU 11 realizes various processes by executing programs stored in an internal memory, the ROM 12 or the NVM 14 in advance. For example, by executing the program, the CPU 11 has a function of transmitting a command to the IC card 2 by the card reader/writer 15, a function of performing various processes based on data such as a response received from the IC card 2, and the like. Through these functions, the CPU 11 transmits to the IC card 2 via the card reader/writer 15 a write command including data inputted into the operation unit 16, prescribed data, or the like.

For example, the CPU 11 may be a processor that realizes control and information processing of each part in the IC card processing device 1 by executing the program. Note that some of the various functions realized by the CPU 11 executing the program may be realized by a hardware circuit. In this case, the CPU 11 controls the functions executed by the hardware circuit.

The ROM 12 is a nonvolatile memory in which programs for control and control data and the like are stored in advance. The control program and the control data stored in the ROM 12 are incorporated in advance in accordance with specifications of the IC card processing device 1. The ROM 12 stores, for example, a program (for example, BIOS) for controlling a circuit board of the IC card processing device 1.

The RAM 13 is a volatile memory. The RAM 13 temporarily stores data under processing of the CPU 11 and the like. The RAM 13 stores various application programs in accordance with instructions from the CPU 11. Further, the RAM 13 may store data necessary for executing the application program, an execution result of the application program, and the like.

The NVM 14 is a data-writable and data-rewritable nonvolatile memory. The NVM 14 is configured by, for example, a hard disk drive, an SSD, an EEPROM (registered trademark), or a flash memory. The NVM 14 stores control programs, applications, and various data according to the operational application of the IC card processing device 1.

The card reader/writer 15 is an interface device for sending and receiving data to and from the IC card 2. The card reader/writer 15 is configured by an interface corresponding to a communication method of the IC card 2. For example, when the IC card 2 is a contact-type IC card, the card reader/writer 15 includes a contact portion and the like for physically and electrically connecting with the contact portion of the IC card 2.

When the IC card 2 is a non-contact type IC card, the card reader/writer 15 includes an antenna, a communication control unit for performing wireless communication with the IC card 2, and the like. The card reader/writer 15 is configured to perform power supply, clock supply, reset control, and data transmission/reception to the IC card 2.

With such functions, the card reader/writer 15 controls the power supply to the IC card 2, activation (star-up) of the IC card 2, the clock supply, the reset control, transmission of various commands, and reception of answers (responses) to the commands transmitted, and the like.

Various operation instructions are inputted into the operation unit 16 by an operator of the IC card processing device 1. The operation unit 16 transmits data of the operation instruction inputted by the operator to the CPU 11. The operation unit 16 is, for example, a keyboard, a numeric keypad, a touch panel, or the like.

The display 17 is a display device that displays various information under control of the CPU 11.

The display 17 is, for example, a liquid crystal monitor or the like.
The display 17 may be integrally formed with the operation unit 16.

Next, the IC card 2, which is a portable electronic device, will be described. The IC card 2 is configured to be activated (to be operable) by being supplied with electric power from an external device such as the IC card processing device 1.
The IC card 2 may perform contact type communication with the IC card processing device 1 or may perform non-contact communication.

Next, a configuration example of the IC card 2 will be described.

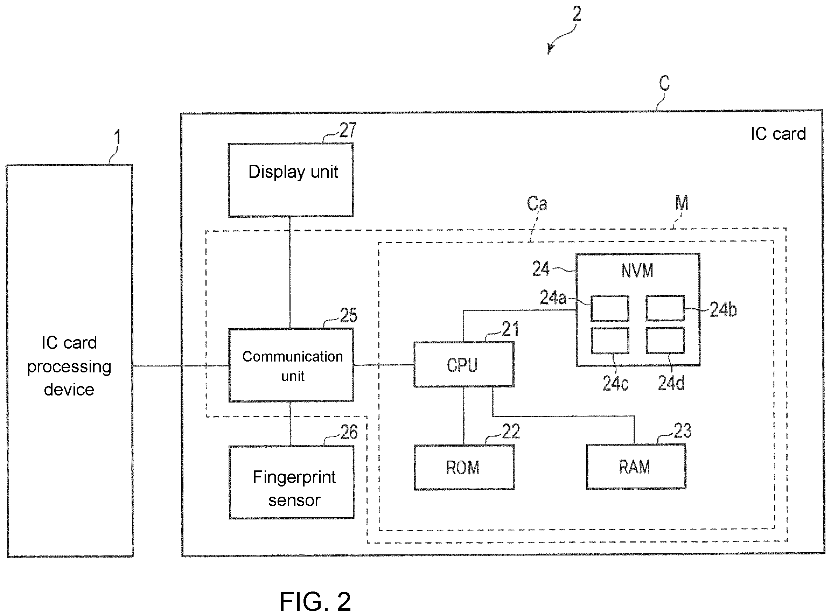

FIG. 2 is a block diagram schematically showing a configuration example of the IC card 2 according to the embodiment.
The IC card 2 has a card-like main body C made of plastic or the like. A module M is built into the main body C. In the module M, in a state where the IC chip Ca and an external interface (for example, a communication unit 25) as a communication unit are connected, both are integrally formed and the module M is buried in the main body C of the IC card 2.

In the configuration example shown in FIG. 2, the IC card 2 includes the module M, a fingerprint sensor 26, a display unit 27, and the like. The module M includes a communication unit 25, an IC chip Ca, and the like. The IC chip Ca includes a CPU 21, a ROM 22, a RAM 23, an NVM 24, and the like.

These units are connected to each other via a data bus. A necessary configuration may be added to the IC card 2 as appropriate or an unnecessary configuration may be deleted from the IC card 2.

The CPU 21 functions as a control unit that controls the entire IC card 2. The CPU 21 performs various processes on the basis of control programs and control data stored in the ROM 22 or the NVM 24. For example, by executing programs stored in the ROM 22, the CPU 21 performs various processes in accordance with an operation control of the IC card 2 or an operation mode of the IC card 2.

For example, the CPU 21 may be a processor that realizes control of each part in the IC card 2 and information processing by executing a program.
Note that some of the various functions realized by the CPU 21 executing the programs may be realized by a hardware circuit. In this case, the CPU 21 controls functions executed by the hardware circuit.

The ROM 22 is a nonvolatile memory that stores control programs, control data and the like in advance. The ROM 22 is incorporated in the IC card 2 in a state where the control programs, the control data and the like are stored at the manufacturing stage. That is, the control program and the control data stored in the ROM 22 are incorporated in advance in accordance with the specifications of the IC card 2 or the like.

The RAM 23 is a volatile memory. The RAM 23 temporarily stores data under processing of the CPU 21 and the like. For example, the RAM 23 functions as a calculation buffer, a reception buffer, and a transmission buffer. The calculation buffer temporarily holds results of various arithmetic processing executed by the CPU 21 and the like. The reception buffer holds command data and the like received from the IC card processing device 1 via the communication unit 25. The transmission buffer holds message (response data) and the like to be transmitted to the IC card processing device 1 via the communication unit 25.

The NVM 24 (storage unit) is configured by a data-writable and data-rewritable nonvolatile memory such as an EEPROM (registered trademark) or a flash ROM, for example. The NVM 24 stores control programs, applications, and various data in accordance with the operational application of the IC card 2. For example, in the NVM 24, a program file, a data file, and the like are created. In each created file, the control program and the various data are written.

Further, the NVM 24 includes a storage area 24a, a storage area 24b, a storage area 24c, a storage area 24d, and the like.
The storage area 24a stores biometric information for the personal authentication as registered biometric information. For example, the storage area 24a stores biometric information of the user of the IC card 2. Here, the storage area 24a stores fingerprint information as the biometric information. For example, the fingerprint information indicates a feature of the fingerprint of the user. Further, the fingerprint information may indicate a feature of the fingerprint of each of the plurality of fingers.

The storage area 24a stores biometric information of a registrant used for biological verification as the registered biometric information. In the present embodiment, the storage area 24a stores fingerprint information of the registrant for performing fingerprint authentication. For example, the storage area 24a stores the fingerprint information created from the fingerprint image of the user when the IC card 2 is issued. Further, as for the storage area 24a, the fingerprint information may be appropriately updated on the basis of a command or the like from a host terminal or the like.

The storage area 24b stores the registered information to be verified with the inputted information. In the present embodiment, the storage area 24b stores a PIN (Personal Identification Number) for personal authentication as registered information. For example, the PIN is a sequence of numbers. It should be noted that the storage area 24b may store a password composed of a character string or the like as information used as the PIN.

The storage area 24b stores a PIN designated by the user or a PIN issued by the system as the registered information. For example, when the IC card 2 is issued, the storage area 24b stores the PIN that the user has inputted to the host terminal or the like. Further, as for the storage area 24b, the PIN may be appropriately updated in accordance with a command or the like from the host terminal.

The storage area 24c is a first storage unit for storing a first count value. The storage area 24d is a second storage unit for storing a second count value. The first storage unit and the second storage unit will be described later.

The communication unit 25 is an interface for sending and receiving data to and from the IC card processing device 1. That is, the communication unit 25 is an interface for performing communication with the card reader/writer 15 of the IC card processing device 1. When the IC card 2 is realized as the contact type IC card, the communication unit 25 includes a communication control unit and a contact portion for physically and electrically contacting the card reader/writer 15 of the IC card processing device 1 and transmitting and receiving a signal. For example, the IC card 2 is activated by receiving the operation power and the operation clock from the IC card processing device 1 via the contact portion.

When the IC card 2 is realized as the contactless IC card, the communication unit 25 includes a communication control unit such as a modulation and demodulation circuit for performing wireless communication with the card reader/writer 15 of the IC card processing device 1 and an antenna. For example, the IC card 2 receives radio waves from the IC card processing device 1 via the antenna, the modulation/demodulation circuit, and the like. The IC card 2 creates the operation power and the operation clock by a power supply unit (not shown) from the radio waves, and is activated.

The fingerprint sensor 26 acquires a fingerprint image from a user's finger. For example, the fingerprint sensor 26 includes a CCD sensor or the like. The fingerprint sensor 26 transmits the fingerprint image to the CPU 21.

Note that the fingerprint sensor 26 may extract the feature from the fingerprint image and create fingerprint information indicating the feature. The fingerprint sensor 26 may transmit the created fingerprint information to the CPU 21.

The display unit 27 displays various information under the control of the CPU 21. For example, the display unit 27 includes a lamp indicating that authentication was successful and a lamp indicating that authentication failed. Note that the display unit 27 may be a liquid crystal display or the like.

Next, functions realized by the CPU 11 of the IC card processing device 1 will be described.
First, the CPU 11 has a function of causing the IC card 2 to perform a first authentication process.
For example, the CPU 11 transmits a first authentication command to the IC card 2 through the card reader/writer 15. The first authentication command is a command for causing the IC card 2 to perform the first authentication process. The first authentication process will be described later.

Further, the CPU 11 has a function of causing the IC card 2 to perform a second authentication process.
For example, the CPU 11 receives a response requesting a PIN from the IC card 2 through the card reader/writer 15. For example, the CPU 11 receives a response requesting a PIN as a response to the first authentication command.

Upon receiving the response, the CPU 11 receives an input of the PIN through the operation unit 16. The CPU 11 transmits the received PIN to the IC card 2. For example, the CPU 11 transmits a second authentication command including the PIN to the IC card 2.

The second authentication command is a command for causing the IC card 2 to perform the second authentication process. The second authentication process will be described later.

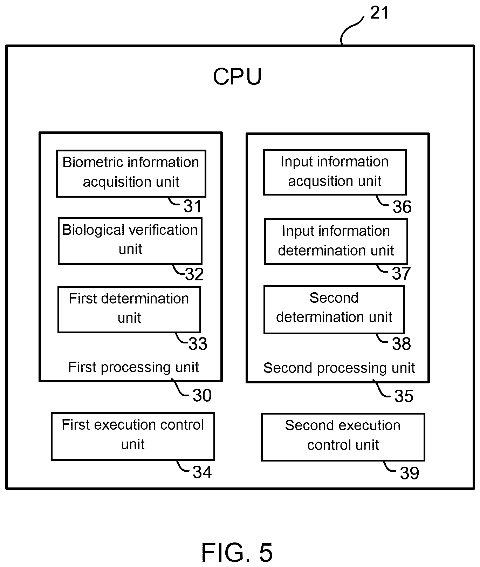

Next, functions realized by the CPU 21 of the IC card 2 will be described with reference to FIG. 5.
First, the CPU 21 has a function of performing the first authentication process. The first authentication process is an authentication process which determines that the authentication has succeeded when the verification rate of the fingerprint information exceeds the first authentication threshold value.

With respect to the first authentication process, the CPU 21 realizes the following functions as the first processing unit 30.

The CPU 21 has a function (biometric information acquisition unit 31) for acquiring fingerprint information from a humanbeings' biological body as the biometric information. For example, upon receiving the first authentication command, the CPU 21 acquires a fingerprint image obtained by photographing a fingerprint of the humanbeings' biological body through the fingerprint sensor 26. The CPU 21 extracts a feature from the acquired fingerprint image. The CPU 21 creates and acquires fingerprint information indicating the feature.

Further, the CPU 21 has a function (biological verification unit 32) for calculating a verification rate between the acquired fingerprint information and the fingerprint information stored in the storage area 24a.
For example, the CPU 21 calculates a matching rate between the fingerprint information acquired from the humanbeings' biological body and the fingerprint information stored in the storage area 24a as the verification rate. A method of calculating the matching rate between the fingerprint information acquired from the humanbeings' biological body and the fingerprint information stored in the storage area 24a may be, for example, a feature point method, a relation method, or other known method.

Further, the CPU 21 has a function (first determination unit 33) that performs authentication using the verification rate and the first authentication threshold value.
For example, the CPU 21 acquires a preset first authentication threshold value from the NVM 24 or the like. The CPU 21 compares the verification rate with the first authentication threshold value. When determining that the verification rate exceeds the first authentication threshold value (when the first authentication process was successful), the CPU 21 transmits to the IC card processing device 1 through the communication unit 25 information (success information) indicating that the authentication has succeeded as a response to the first authentication command.

Further, when determining that the verification rate does not exceed the first authentication threshold value (when the first authentication process failed), the CPU 21 transmits to the IC card processing device 1 through the communication unit 25 information indicating that the authentication failed as a response to the first authentication command.

Further, the CPU 21 has a function of counting the number of times of filing in the first authentication process.
The storage area 24c functions as a first storage unit and stores the number of times of filing in the first authentication process. That is, the first storage unit stores the number of times that the verification rate does not exceed the first authentication threshold value as the first count value. For example, when determining that the verification rate does not exceed the first authentication threshold value, the CPU 21 counts up the first count value.

Further, the CPU 21 has a function (first execution control unit 34) of locking the first authentication process when the first count value exceeds a predetermined first lock threshold value.
For example, when the first count value stored in the storage area 24c exceeds the first lock threshold value, the CPU 21 does not perform the first authentication process. For example, when the first authentication process is locked, the CPU 21 performs a second authentication process which is described later.

Further, the CPU 21 has a function of performing a second authentication process. The second authentication process is an authentication process which determines that the authentication has succeeded when the verification rate exceeds the second authentication threshold value in the case where the PIN authentication was successful.
With regard to the second authentication process, the CPU 21 realizes the following functions as the second processing unit 35.

The CPU 21 has a function (PIN acquisition unit, input information acquisition unit 36) of acquiring a PIN used for the PIN authentication.

For example, when the first authentication process failed, or when the first authentication process is locked, the CPU 21 acquires the PIN.

The CPU 21 transmits a response requesting the PIN to the IC card processing device 1 through the communication unit 25.
For example, the CPU 21 transmits a response requesting the PIN as a response indicating that the authentication failed.

The CPU 21 receives the second authentication command including the PIN from the IC card processing device 1 through the communication unit 25. The CPU 21 extracts the PIN from the second command and acquires the PIN.

Further, the CPU 21 has a function (input information determination unit 37) of performing PIN authentication using the acquired PIN.
For example, the CPU 21 compares the acquired PIN with the PIN stored in the storage area 24b. If it is determined that both PINs match each other, the CPU 21 determines that the PIN authentication has succeeded.

Further, when determining that the both PINs do not match each other, the CPU 21 determines that the PIN authentication failed (it is determined that the second authentication process failed). When determining that the PIN authentication failed, the CPU 21 transmits to the IC card processing device 1 through the communication unit 25 information indicating that the authentication failed as a response to the second authentication command.

Further, the CPU 21 has a function (second determination unit 38) of performing authentication using the verification rate and the second authentication threshold value. For example, if it is determined that the PIN authentication was successful, the CPU 21 acquires a preset second authentication threshold value from the NVM 24 or the like. The second authentication threshold value is lower than the first authentication threshold value.

The CPU 21 compares the verification rate with the second authentication threshold value. When determining that the verification rate exceeds the second authentication threshold value (when the second authentication process is successful), the CPU 21 transmits information (success information) that the authentication has succeeded as a response to the second authentication command from the IC card processing device 1 through the communication unit 25.

Further, when determining that the verification rate does not exceed the second authentication threshold value (when the second authentication process failed), the CPU 21 transmits to the IC card processing device 1 through the communication unit 25 information indicating that the authentication failed as a response to the second authentication command.

Further, the CPU 21 has a function of counting the number of times of filing in the second authentication process.
The storage area 24d functions as a second storage unit, and stores the number of times of filing in the second authentication process as a second count value. That is, the second storage unit stores, as the second count value, the number of times of total of the number of times the verification rate has not exceeded the second authentication threshold value and the number of times the PIN authentication failed. For example, when determining that the verification rate does not exceed the second authentication threshold value, or when determining that the PIN authentication failed, the CPU 21 counts up the second count value.

Further, the CPU 21 has a function (second execution control unit 39) for locking the second authentication process when the second count value exceeds a predetermined second lock threshold value.
For example, when the second count value stored in the storage area 24d exceeds the second lock threshold value, the CPU 21 does not perform the second authentication process. For example, when the second authentication process is locked, the CPU 21 transmits information indicating that the authentication failed as a response to the second authentication command. Also, the second lock threshold value may be lower than the first lock threshold value.

Further, the CPU 21 may display a authentication result of the first authentication process or the second authentication process on the display unit 27. For example, when the first authentication process or the second authentication process is successful, the CPU 21 turns on a lamp indicating that the authentication was successful. Further, when the first authentication process and the second authentication process fails, the CPU 21 turns on a lamp indicating that the authentication failed.

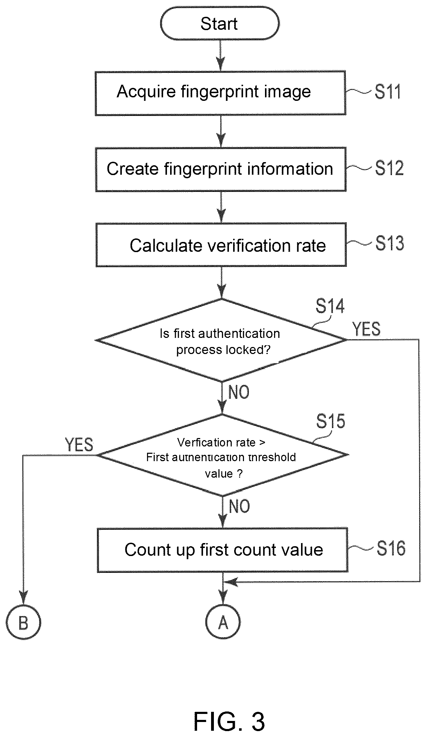

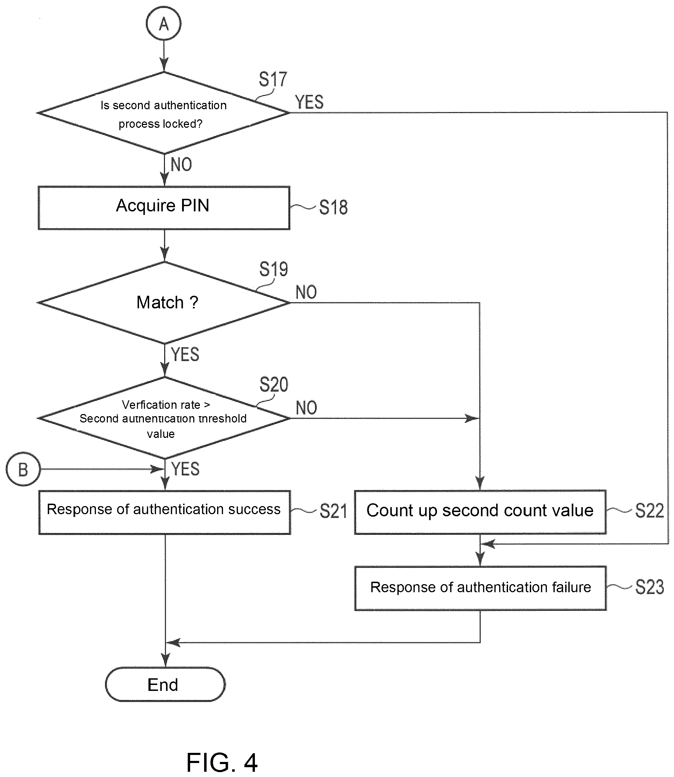

Next, an operation example of the IC card 2 will be described. FIGs. 3 and 4 are flowcharts for explaining an operation example of the IC card 2.
Here, it is assumed that the CPU 21 has received the first authentication command through the communication unit 25. Further, it is assumed that the user of the IC card 2 brings his finger into contact with the fingerprint sensor 26 so that the fingerprint sensor 26 can read a fingerprint.

First, the CPU 21 of the IC card 2 acquires a fingerprint image from the humanbeings' biological body through the fingerprint sensor 26 (S11). Upon acquiring the fingerprint image, the CPU 21 creates fingerprint information from the fingerprint image (S12). Upon creating the fingerprint information, the CPU 21 calculates the verification rate between the created fingerprint information and the fingerprint information stored in the storage area 24 a (S13).

Upon calculating the verification rate, the CPU 21 determines whether or not the first authentication process is locked (S14). For example, the CPU 21 determines whether or not the first count value exceeds the first lock threshold value.

When determining that the first authentication process is not locked (S14, NO), the CPU 21 determines whether or not the verification rate exceeds the first authentication threshold value (S15). When determining that the verification rate does not exceed the first authentication threshold value (S15, NO), the CPU 21 counts up the first count value in the storage area 24c (S16).

Upon counting up the first count value, the CPU 21 determines whether or not the second authentication process is locked (S17). For example, the CPU 21 determines whether or not the second count value exceeds the second lock threshold value.

The CPU 21 determines that the second authentication process is not locked (S17, NO), the CPU 21 acquires the PIN from the IC card processing device 1 (S18). Upon acquiring the PIN, the CPU 21 determines whether or not the acquired PIN and the PIN stored in the storage area 24 b are matched (S19).

When determining that the acquired PIN matches the PIN stored in the storage area 24b (S19, YES), the CPU 21 determines whether or not the verification rate exceeds the second authentication threshold value (S20).

When determining that the verification rate exceeds the first authentication threshold value (S15, YES) or when determining that the verification rate exceeds the second authentication threshold value (S20, YES), the CPU 21 transmits a response indicating that the authentication was successful to the IC card processing device 1 through the communication unit 25 (S21).

When determining that the acquired PIN does not match the PIN stored in the storage area 24b (S19, NO), or when determining that the verification rate does not exceed the second authentication threshold value (S20, NO), the CPU 21 counts up the second count value in the storage area 24c (S22).

When determining that the second authentication process is locked (YES, S17) or when counting up the second count value (S22), the CPU 21 transmits a response indicating that the authentication failed to the IC card processing device 1 through the communication unit 25 (S23).

When transmitting the response indicating that the authentication was successful (S21), or when transmitting the response indicating that the authentication failed (S23), the CPU 21 ends the operation.

Note that the CPU 21 may perform S11 and S12 before receiving the first authentication command.
In this case, when receiving the first authentication command, the CPU 21 executes S13 and the steps following S13.

Further, the CPU 21 may receive the PIN from the IC card processing device 1 before starting the first authentication process. In this case, if the first authentication process is successful, the CPU 21 ends the operation without using the PIN. Further, the CPU 21 uses the PIN in the second authentication process.

Further, the CPU 21 may newly acquire a fingerprint image at the time of the second authentication process. In this case, in the second authentication process, the CPU 21 may use fingerprint information created from the newly acquired fingerprint image.

Further, when the first or second authentication process is locked, the CPU 21 may store information indicating the locked authentication process in the response. The CPU 11 of the IC card processing device 1 may display on the display 17 or the like that the first or second authentication process is locked according to the response.

Further, the IC card processing device 1 may be provided with a fingerprint sensor. The IC card 2 may acquire a fingerprint image or fingerprint information from the IC card processing device 1.

Further, in the present IC card processing system, the IC card processing device 1 may perform the first authentication process or the second authentication process. For example, the IC card may transmit the fingerprint information and the PIN stored in the NVM 14 to the IC card processing device 1.

The IC card configured as described above acquires the PIN inputted by the user when the verification rate does not exceed the first authentication threshold value. When the PIN authentication is successful, the IC card compares the verification rate with the second authentication threshold value. When the verification rate exceeds the second authentication threshold value, the IC card determines that the authentication has succeeded.

Therefore, even when the PIN authentication is successful, the IC card performs the authentication process with reference to the verification rate. As a result, the IC card can prevent illegal authentication even when the PIN leaks. As a result, the IC card can safely authenticate the user.

Also, since the second authentication threshold value is lower than the first authentication threshold value, the IC card can properly perform authentication even when the verification rate decreases due to an external factor or the like.

Further, the IC card separately counts the number of times the first authentication process fails and the number of times the second authentication process fails. Further, the IC card sets a threshold value for each number of times. When each number of times exceeds respective threshold value, the IC card locks the authentication process in which the number of times exceeds the threshold value. As a result, the IC card can lock each authentication process under different conditions.

In the above description, the IC card is used as an example of the portable electronic device, but a shape of the portable electronic device is not limited to a card shape but may be other shapes.

While several embodiments of the present invention have been described, these embodiments have been presented by way of example and are not intended to limit the scope of the invention. These novel embodiments can be implemented in various other forms, and various omissions, substitutions and changes can be made without departing from the spirit of the invention. These embodiments and modifications thereof are included in the scope and gist of the invention and are included in the invention described in the claims and the equivalent scope thereof.

## Claims

1. A portable electronic device comprising:
a communication unit which transmits and receives data to and from an external device;
a storage unit which stores registered biometric information and registered information;
a first processing unit including:
a biometric information acquisition unit which acquires biometric information of a humanbeings' biological body; and
a biological verification unit which calculates a verification rate between the biometric information acquired by the biometric information acquisition unit and the registered biometric information stored in the storage unit, and
a first determination unit which determines whether or not the verification rate exceeds a first authentication threshold value,
wherein the first processing unit performs processing of transmitting success information indicating success of authentication to the external device through the communication unit when the first determination unit determines that the verification rate exceeds the first authentication threshold value; and
a second processing unit including:
an input information acquisition unit which acquires input information to be verified with the registered information stored in the storage unit,
an input information determination unit which determines whether or not the input information acquired by the input information acquisition unit matches the registered information, and
a second determination unit which determines whether or not the verification rate exceeds a second authentication threshold value which is lower than the first authentication threshold value,
wherein when the first determination unit determines that the authentication information does not exceed the authentication threshold, the input information determination unit determines that the input information acquired by the input information acquisition unit matches the registered information, and the second determination unit determines that the verification rate exceeds the second authentication threshold value, the second processing unit performs processing of transmitting success information indicating success of authentication to the external device through the communication unit.

2. The portable electronic device according to claim 1, further comprising:
a first storage unit which stores a number of times that the verification rate has not exceeded the first authentication threshold value as a first count value; and
a first execution control unit which executes processing by the second processing unit without performing processing by the first processing unit when the first count value stored in the first count value storage unit exceeds the first lock threshold value.

3. The portable electronic device according to claim 1 or claim 2, further comprising:
a second storage unit which stores a number of times that the verification rate has not exceeded the second authentication threshold value as a second count value; and
a second execution control unit which transmits information indicating that the authentication failed to the external device through the communication unit without performing the processing by the second processing unit when the second count value stored in the second storage unit exceeds a second lock threshold value.

4. The portable electronic device according to claim 3, wherein
the second storage unit further stores a number of times of total of a number of times that the verification rate has not exceed the second authentication threshold value and a number of times that the input information has not matched the registered information, as the second count value.

5. The portable electronic device according to any one of claims 1 to 4, wherein
the registered information stored in the storage unit is a PIN, and
the input information acquisition unit acquires the input information from the external device through the communication unit.

6. The portable electronic device according to any one of claims 1 to 5, wherein the biometric information is fingerprint information.

7. The portable electronic device according to claim 6, further comprising
a fingerprint sensor for reading a fingerprint image,
wherein the biometric information acquisition unit creates fingerprint information from the fingerprint image read by the fingerprint sensor.

8. The portable electronic device according to any one of claims 1 to 7 comprising:
a module including the communication unit, the storage unit, the first processing unit, and the second processing unit; and
a main body containing the module inside.

9. The portable electronic device according to claim 8, wherein the main body is in a form of a card.
